# EUROPEAN PATENT SPECIFICATION

(11) **EP 2 045 830 B1**
(45) Date of publication and mention of the grant of the patent: **05.03.2014**
(21) Application number: 08165438.6
(22) Date of filing: 29.09.2008
(51) Int. Cl.: H01H 85/20, H01H 85/02, H01H 85/041

(54) **Fastening device for low-profile fuses of vehicle**
Befestigungsvorrichtung für Niederprofilsicherungen eines Fahrzeugs
Dispositif de fixation pour fusibles surbaissés d'un véhicule

(30) Priority: 02.10.2007 KR 20070099526
(43) Date of publication of application: 08.04.2009
(73) Proprietor: Tyco Electronics AMP Korea Limited, Kyungsan-si (KR)
(72) Inventor: Sub, Lee Chul c/o Tyco Electronics AMP Korea Ltd., Kyungsan-Si (KR); Min, Park Cheol c/o Tyco Electr. AMP Korea Ltd., Kyungsan-Si (KR)
(74) Representative: Johnstone, Douglas Ian

(56) References cited:
- WO-A1-99/36930
- US-B1- 6 406 331

## Description

The present invention relates to a fastening device for a low-profile fuse of vehicle, and more particularly, to a fastening device for a low-profile fuse of vehicle, which can achieve simple and robust coupling of the low-profile fuse while enabling the low-profile fuse to be easily connected to or disconnected from a vehicular junction box.

Generally, a vehicular junction box is used to receive a plurality of fuses for various electric devices and is continuously exposed to slight current. When a vehicle is not used for a long time, the slight current passing through the junction box may cause battery discharge and consequently, a difficulty in engine starting.

To solve the above-described problem, a vehicular junction box is provided with a main fuse to disconnect or connect all circuits of a vehicle. The main fuse is separated from the junction box during long-periods of non-use of a vehicle, for example, export shipping of a vehicle, in order to prevent current from flowing through the vehicle and consequently, prevent battery discharge.

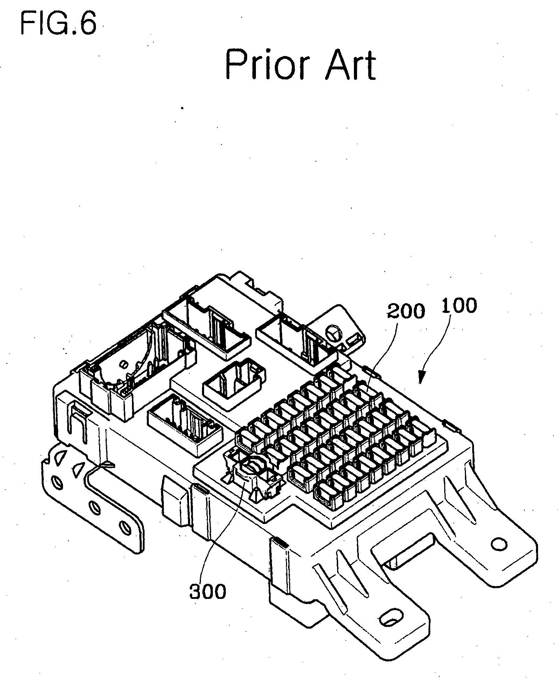

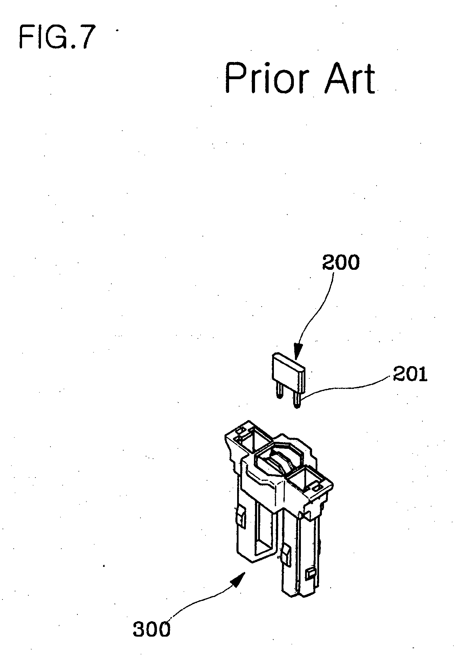

However, completely separating the main fuse from the junction box entails a risk of loss of the main fuse. Therefore, to eliminate this problem, as shown in FIGS. 6 and 7, a fuse fastening device 300 has been developed, by means of which a fuse 200 can be moved upward or downward while being coupled in a junction box 100, so as to be connected to or disconnected from the junction box 100.

In the above-described conventional fuse fastening device 300, the fuse 200 is inserted into the fuse fastening device 300 from an upper end of the device 300 such that connecting terminals 201 of the fuse 200 protrude downwardly from the fuse fastening device 300. If the fuse fastening device 300, with the fuse 200 coupled thereto, is moved downwardly, the connecting terminals 201 of the fuse 200 are inserted into and connected to the junction box 100, achieving power connection throughout a vehicle. If the fuse fastening device 300 is moved upwardly, the connecting terminals 201 of the fuse 200 are separated and disconnected from the junction box 100 while the fuse fastening device 300 is still mounted in the junction box 100.

A further prior art fuse holder assembly (on which the preamble of claim 1 is based) is disclosed in patent US 6406331 B1. The fuse holder assembly includes a socket containing terminals and a fuse holder in which a fuse is mounted and which is secured to the socket so as to be moveable relative thereto to selectively engage a fuse held by the fuse holder with the terminals. The fuse is mounted in the fuse holder so as to be rotable out of alignment with the terminals.

Recently, to provide a light-weight vehicle and a miniaturized junction box, a low-profile fuse, having a smaller size than conventional fuses, has been developed. Such a low-profile fuse has a significantly low height and thus, connecting terminals thereof are configured to protrude laterally from the fuse. Therefore, it is difficult to connect the low-profile fuse to a junction box by inserting the fuse into the fuse fastening device from the upper end of the device as described above. Moreover, it is difficult to maintain efficient connection between the low-profile fuse and the junction box.

Therefore, the present invention has been made in view of the above problems, and it is a preferred object of the present invention to provide a fastening device for a low-profile vehicular fuse, which can achieve not only simple separation/coupling of the low-profile fuse, but also efficient connection between the low-profile fuse and a junction box while maintaining plug-and-socket coupling thereof.

It is another preferred object of the present invention to provide a fastening device for a low-profile vehicular fuse, which can prevent a low-profile fuse from being tilted laterally during upward or downward movement of a plug thereof.

It is a further preferred object of the present invention to provide a fastening device for a low-profile vehicular fuse, wherein a plug of the fastening device can be firmly fixed to the low-profile fuse while being easily movable upwardly or downwardly within a socket with a simplified configuration.

It is another preferred object of the present invention to provide a fastening device for a low-profile vehicular fuse, which can achieve an enhanced fastening force with respect to the low-profile fuse during downward movement of a plug thereof.

It is a still further preferred object of the present invention to provide a fastening device for a low-profile vehicular fuse, wherein a plug of the fastening device can be firmly fixed at the maximum upwardly or downwardly moved position thereof.

It is a still further preferred object of the present invention to provide a fastening device for a low-profile vehicular fuse, wherein a pair of low-profile fuses can be coupled simultaneously to a single plug of the fastening device.

In accordance with the present invention, there is provide a fastening device for low-profile fuses of a vehicle, the fastening device serving to electrically connect a low profile fuse to or disconnect it from a vehicular junction box via translational movement thereof while maintaining coupling between the low-profile fuse and the junction box and comprising: a socket integrally formed at surface of the junction box and having a pair of plug coupling recesses and a fuse connecting recess, which are situated in the surface of the junction box, exposed terminals being disposed inside the fuse connecting recess; and a plug translatably movably coupled to' the socket to enable electrical connection or disconnection between the low-profile fuse and the terminals inside the fuse connecting recess, characterized in that the plug is laterally couplable with the low-profile fuse and the device further comprises at least one fuse inserting bracket provided at a side of the plug body to allow the low-profile fuse to be laterally inserted thereinto and having a fuse fixing protrusion.

The fastening device may further comprise a supporting wall protruding from the upper surface of the junction box at the outside of the fuse connecting recess and serving to support a sidewall of the low-profile fuse.

The plug may include: a plug body configured to allow a user to simply grip the plug by hand and serving to support the low-profile fuse; a pair of vertically movable guides protruding downward from opposite sides of the plug body so as to be vertically movably inserted into the respective plug coupling recesses and each having a protrusion to be fixedly caught at an upwardly or downwardly moved position of the plug; and at least one fuse inserting bracket provided at a side of the plug body to allow the low-profile fuse to be laterally inserted thereinto and having a fuse fixing protrusion.

The fuse inserting bracket may further have a fuse supporting protrusion formed at an upper end thereof to support an upper end of the low-profile fuse.

Each of the fuse coupling recesses may be formed at an inner surface thereof with an indentation corresponding to the protrusion.

The at least one fuse inserting bracket may include a pair of fuse inserting brackets symmetrically provided at both sides of the plug body.

The above and other objects, features and other advantages of the present invention will be more clearly understood from the following detailed description (which is provided by way of example only) taken in conjunction with the accompanying drawings, in which:
FIG. 1 is an exploded perspective view illustrating a first embodiment of the present invention;
FIG. 2 is an exploded perspective view illustrating a second embodiment of the present invention;
FIG. 3 is an exploded perspective view illustrating a third embodiment of the present invention;
FIG. 4 is a plan view illustrating a plug shown in FIG. 3;

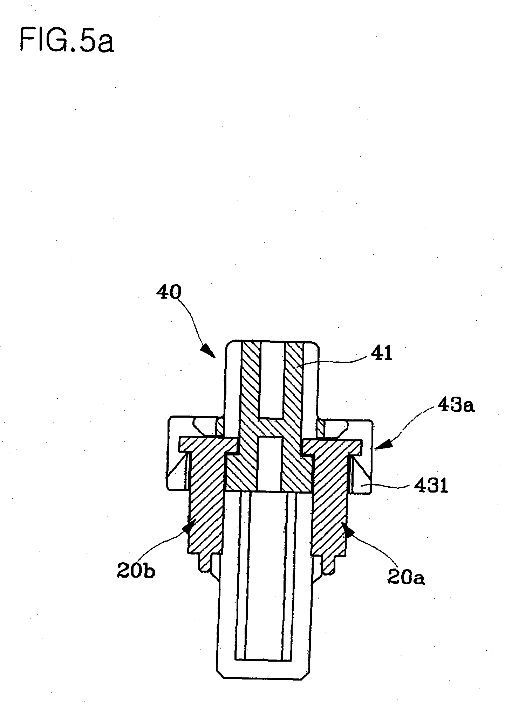

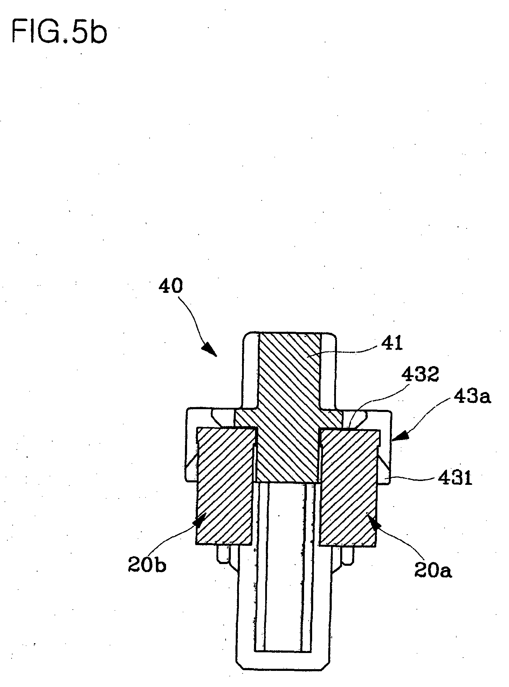

FIGS. 5A and 5B illustrate coupling relationship between a low-profile fuse and a plug, FIG. 5A being a sectional view taken along the line A-A of FIG. 4; and FIG. 5B being a sectional view taken along the line B-B of FIG. 4;
FIG. 6 is a perspective view illustrating one example of a conventional vehicular junction box; and
FIG. 7 is a perspective view of a conventional fuse fastening device.

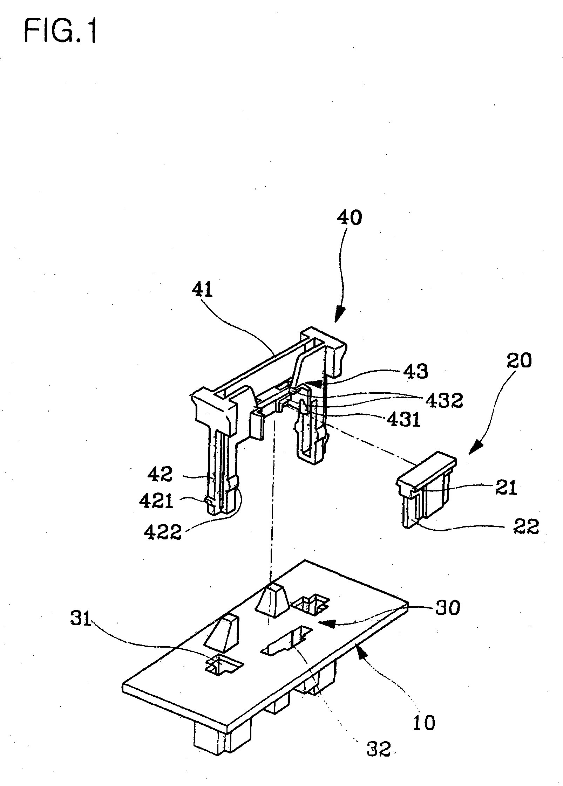

FIG. 1 is an exploded perspective view illustrating a first embodiment of the present invention. As shown, the present invention relates to a fastening device for a low-profile vehicular fuse 20 that is formed with a lower height than conventional vehicular fuses and has laterally-protruding connecting terminals 22. The fastening device consists of a socket 30 integrally formed at an upper surface of a vehicular junction box 10, and a plug 40 coupled into the socket 30 to connect or disconnect the low-profile fuse 20 to or from the junction box 10 via upward or downward movement thereof. More particularly, the small-size low-profile fuse 20 is inserted into the plug 40 from one side of the plug 40, whereby the fastening device can achieve not only simple and robust coupling of the low-profile fuse 20, but also efficient connection/disconnection between the low-profile fuse 20 and the junction box 10.

The socket 30 is integrally formed at the upper surface of the vehicular junction box 10 in which a plurality of fuses and relays, etc. is mounted. The socket 30 has plug coupling recesses 31 indented or formed in the upper surface of the junction box 10, along or in which vertically-movable or translatable guides 42 of the plug 40 are movable upwardly or downwardly, (as will be described hereinafter). The socket 30 also includes a fuse connecting recess 32 into which the low-profile fuse 20 is inserted. Terminals (not shown) are disposed inside the fuse connecting recess 32 to enable connection with the connecting terminals 22 of the low-profile fuse 20. If the plug 40 is moved completely downwardly, the connecting terminals 22 of the low-profile fuse 20 are connected to the terminals (not shown) inside the fuse connecting recess 32. If the plug 40 is moved upwardly, the connecting terminals 22 of the low-profile fuse 20 are electrically disconnected from the socket 30.

The plug 40 serves to receive the low-profile fuse 20 and keep it at a fixed position. The plug 40 is vertically or longitudinally movably coupled in the above-described socket 30, to connect or disconnect the low-profile fuse 20 to or from the junction box 10. The plug 40 consists of a plug body 41 configured to allow a user to easily pull the plug 40 up or push it down by hand and serves to support the low-profile fuse 20. The plug also includes a pair of vertically-movable guides 42 which protrude symmetrically from opposite sides of a lower end of the plug body 41 so as to be inserted into the above-described plug coupling recesses 31 of the socket 30, and a fuse inserting bracket 43 provided at one side of the plug body 41 to enable lateral insertion and fixation of the low-profile fuse 20.

The plug body 41 defines an upper section of the plug 40 and is longitudinally disposed on the upper surface of the junction box 10. The plug body 41 serves to prevent the plug 40 from being completely pushed down into the socket 30 while allowing the user to easily pull the plug 40 up or push it down by hand. The plug body 41 is made of conventional synthetic resins.

The vertically or longitudinally movable guides 42 are inserted into the plug coupling recesses 31 of the above-described socket 30 and serve to guide vertical movement of the plug 40 while preventing unintentional separation of the plug 40 from the socket 30. Preferably, to prevent the plug 40 from being tilted laterally during upward or downward movement thereof, the pair of vertically-movable guides 42 protrude from opposite sides of the lower end of the plug body 41. More preferably, to fixedly keep the plug 40 at the maximum upwardly or downwardly moved position, the plug 40 is formed at an outer surface thereof with protrusions 421 and 422 such that the protrusions 421 and 422 are caught or engaged by the plug coupling recesses 31 of the socket 30 thereby, preventing unnecessary movement of the plug 40 due to vibrations of a vehicle, etc.

The fuse inserting bracket 43 is provided at one side of the plug body 41, to allow the low-profile fuse 20 to be fixed to the plug body 41 while being exposed to the outside. The fuse inserting bracket 43 is formed, at opposite inner sides thereof, with a pair of symmetrical fuse fixing protrusions 431, by which opposite sides of the low-profile fuse 20 are retained or fixedly caught. In a state in which the low-profile fuse 20 has been laterally inserted into the fuse inserting bracket 43 and is fixed by the pair of fuse fixing protrusions 431, the low-profile fuse 20 and the connecting terminals 22 thereof remain exposed. Accordingly, as the low-profile fuse 20 is inserted into the fuse connecting recess 32, the connecting terminals 22 can achieve efficient connection with the above-described terminals inside the socket 30.

With the above-described configuration, the small-size low-profile fuse 20 can be simply and firmly fixed to the plug 40 and in turn, can be connected to or disconnected from the junction box 10 by means of longitudinal, translational or vertical movement of the plug 40 into or out of the socket 30.

Preferably, the above-described fuse inserting bracket 43 is further provided at an upper end thereof with fuse supporting protrusions 432 to support an expanded upper end or outwardly projecting shoulder portion 21 of the low-profile fuse 20 from the upper and lower sides thereof. When the low-profile fuse 20 is inserted into the fuse connecting recess 32, the fuse supporting protrusions 432 press an upper edge of the upper end portion 21 of the low-profile fuse 20, so as to achieve more efficient coupling between the low-profile fuse 20 and the plug 40. In addition, during upward movement of the plug 40, the fuse supporting protrusions 432 press a lower edge of the upper end portion 21 of the low-profile fuse 20 so as to achieve efficient movement of the low-profile fuse 20 while preventing the low-profile fuse 20 being unintentionally separated from the fuse inserting bracket 43.

Preferably, each of the above-described plug coupling recesses 31 is formed at inner surfaces thereof with indentations (not shown), into which the above-described protrusions 421 and 422 are fixedly inserted at the maximum upwardly or downwardly moved position of the plug 40. Once inserted into the indentations, the protrusions 421 and 422 can be separated from the indentations only when a strong external force is applied thereto to induce vertical movement of the plug 40. This has the effect of preventing the low-profile fuse 20 from coming unintentionally connected to or disconnected from the junction box 10 due to various vibrations and shocks of a vehicle when the plug 40 is at its maximum upwardly or downwardly moved position.

Preferably, the above-described vertically movable guides 42 are formed as discrete portions protruding downward from opposite sides of the plug body 41 with a distance therebetween, providing the plug 40 with an upside down U-shaped cross section, and the protrusions 421 and 422 are formed at outer surfaces of the vertically movable guides 42. With this configuration, the vertically movable guides 42 can exhibit elastic flexibility, achieving not only efficient vertical movement thereof when being inserted into the plug coupling recesses 31, but also firm and reliable engagement between the protrusions 421 and 422 and the indentations.

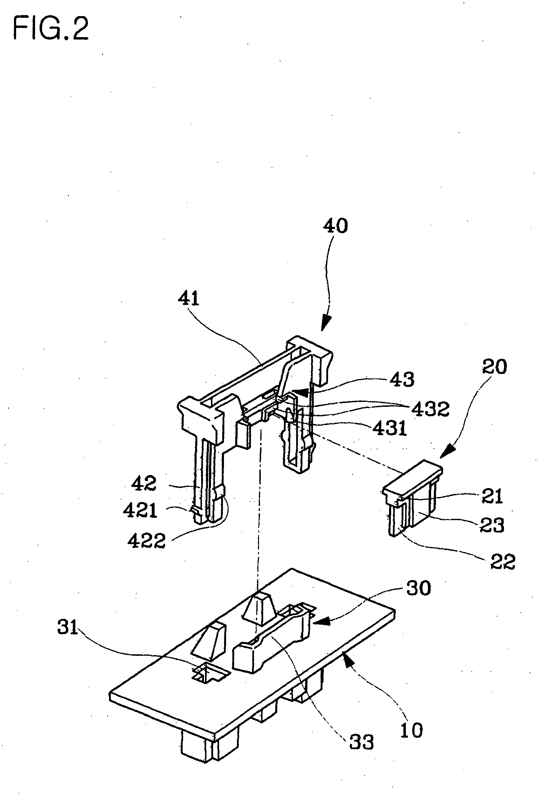

FIG. 2 is an exploded perspective view illustrating a second embodiment of the present invention. The second embodiment includes all the constituent elements of the above-described first embodiment, and additionally, includes a supporting wall 33, which protrudes upwardly from the upper surface of the junction box 10 at the outside of the above-described fuse connecting recess 32 and serves to support a sidewall 23 of the low-profile fuse 20. The supporting wall 33 can prevent the low-profile fuse 20 from being tilted laterally during vertical movement of the plug 40.

Preventing lateral tilting of the low-profile fuse 20 inserted into the fuse connecting recess 32 can eliminate defective connection due to the tilted posture of the low-profile fuse 20 and breakage of the low-profile fuse 20, and the like.

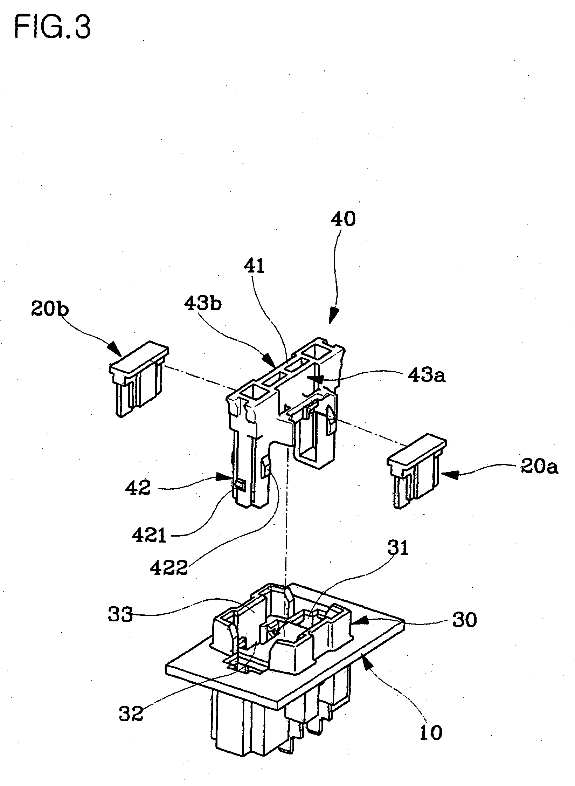

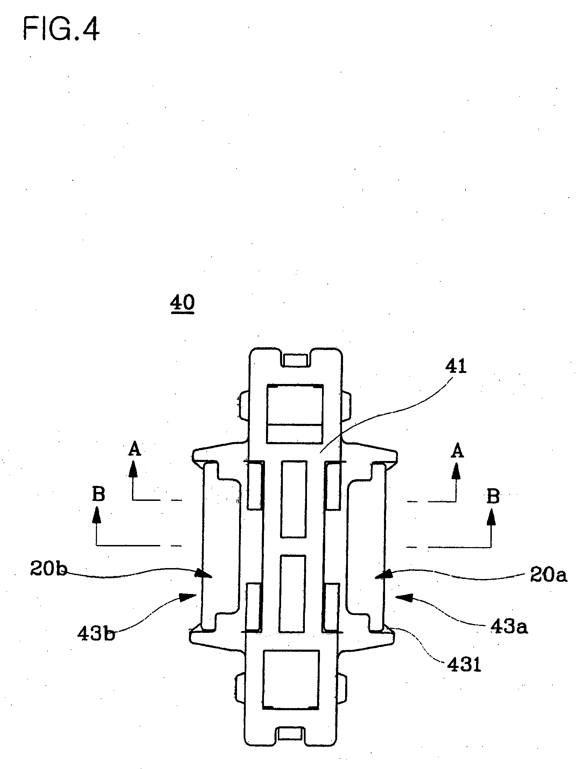

FIG. 4 is a plan view illustrating a plug shown in FIG. 3 illustrating a third embodiment of the present invention, including all the constituent elements of the above-described embodiments, and additionally, including a pair of fuse inserting brackets 43a and 43b, which are symmetrically formed at opposite sides of the plug body 41, to allow a pair of low-profile fuses 20a and 20b to be simultaneously coupled to the single plug 40.

Accordingly, the pair of low-profile fuses 20a and 20b can be simultaneously connected to or disconnected from the junction box 10 through vertical longitudinal or translational movement of the single plug 40, enabling easy engagement or disengagement in connection of a plurality of low-profile fuses. This can also allow the low-profile fuses to occupy a reduced space in the junction box 10, resulting in a reduction in the overall size of the junction box 10.

As is apparent from the above description, the present invention provides a fastening device for a low-profile vehicular fuse having the following effects.

Firstly, according to the present invention, the fastening device can achieve not only simple separation/coupling of the low-profile fuse, but also efficient connection between the low-profile fuse and a junction box while maintaining plug-and-socket coupling thereof. As a result, when it is desired to disconnect the low-profile fuse used in the junction box, the disconnection can be accomplished without completely separating the low-profile fuse from the junction box. This has the effect of preventing the loss of the low-profile fuse and simplifying electrical connection/disconnection between the low-profile fuse and the junction box.

Secondly, when the fastening device further includes a supporting wall, the fastening device can prevent the low-profile fuse from being tilted laterally during vertical movement of a plug thereof, allowing the low-profile fuse, coupled to the plug, to be more efficiently coupled into a fuse connecting recess of a socket of the fastening device.

Thirdly, the plug of the fastening device has a simplified configuration consisting of a plug body, vertically-movable guides and a fuse inserting bracket, and can be efficiently vertically moved in the socket. Through use of the simplified plug, the present invention can achieve firm fixation of the low-profile fuse, simplified coupling between the plug and the low-profile fuse, and convenient operation of the resulting fastening device.

Fourthly, when providing the fuse inserting bracket with fuse supporting protrusions, the fastening device can achieve enhanced coupling force of the low-profile fuse during downward movement of the plug. Accordingly, when the low-profile fuse is connected to the socket, it is possible to prevent the low-profile fuse from being unintentionally separated from the plug while achieving more efficient connection of the low-profile fuse.

Fifthly, according to the present invention, plug coupling recesses are formed in the socket and in turn, each coupling recess is formed at an inner surface thereof with indentations serving to firmly fix the plug at the maximum upwardly or downwardly moved position thereof. This can further prevent unintentional connection or disconnection of the low-profile fuse due to the weight and vibrations of the plug and low-profile fuse.

Sixthly, a pair of fuse inserting brackets can be provided at opposite sides of the plug body to enable the simultaneous coupling of a pair of low-profile fuses in a simplified manner, resulting in an improvement in convenience of use.

While terms such as upward, downward, upper and lower have been employed in the specification these terms should not be considered as limiting. Corresponding directions or translational movement in other directions could be used when the devices shown in the figures are disposed in different orientations. References to the fuse being laterally coupled to the plug should be construed as including coupling to the plug in a direction which is substantially perpendicular to the plug's direction of engagement with the socket.

Although the preferred embodiments of the present invention have been disclosed for illustrative purposes, those skilled in the art will appreciate that various modifications, additions and substitutions are possible, without departing from the scope of the invention as defined in the accompanying claims.

## Claims

1. A fastening device for low-profile fuses (20) of a vehicle, the fastening device serving to electrically connect a low profile fuse (20) to or disconnect it from a vehicular junction box via translational movement thereof while maintaining coupling between the low-profile fuse (20) and the junction box and comprising:
a socket (30) integrally formed at surface of the junction box and having a pair of plug coupling recesses (31) and a fuse connecting recess (32), which are situated in the surface of the junction box, exposed terminals being disposed inside the fuse connecting recess (32); and
a plug (40) translatably movably coupled to the socket (30) to enable electrical connection or disconnection between the low-profile fuse (20) and the terminals inside the fuse connecting recess (32),
**characterized in that** the plug (40) is laterally couplable with the low-profile fuse (20) and the device further comprises at least one fuse inserting bracket (43) provided at a side of the plug body (41) to allow the low-profile fuse (20) to be laterally inserted thereinto and having a fuse fixing protrusion (431).

2. The fastening device according to claim 1, further comprising:
a supporting wall (33) protruding from the surface of the junction box at an outside of the fuse connecting recess (32) and servable to support a sidewall (23) of the low-profile fuse (20).

3. The fastening device according to claim 1 or 2, wherein the plug (40) includes:
a plug body (41) configured to allow a user to simply grip the plug by hand and serving to support the low-profile fuse (20); and
a pair of vertically movable guides (42) protruding downward from opposite sides of the plug body (41) so as to be vertically movably inserted into the respective plug coupling recesses (31) and each having a protrusion (421, 422) to be fixedly caught at an upwardly or downwardly moved position of the plug (40);

4. The fastening device according to any preceding claim, wherein the fuse inserting bracket (43) further has a fuse supporting protrusion (432) formed at an upper end thereof to support an upper end of the low-profile fuse (20).

5. The fastening device according to claim 3, wherein each of the plug coupling recesses (31) is formed at an inner surface thereof with an indentation corresponding to the protrusion (421, 422).

6. The fastening device according to claim 1 or 4, wherein the at least one fuse inserting bracket includes a pair of fuse inserting brackets (43a, 43b) symmetrically provided at both sides of the plug body (41).

## Patentansprüche

1. Befestigungsvorrichtung für Flachsicherungen (20) eines Fahrzeugs, wobei die Befestigungsvorrichtung dazu dient, eine Flachsicherung (20) mittels translatorischer Bewegung derselben mit einem Fahrzeugverteilerkasten elektrisch zu verbinden oder davon zu trennen, wobei die Kopplung zwischen der Flachsicherung (20) und dem Verteilerkasten beibehalten wird, und umfassend:
eine Fassung (30), die an der Oberfläche des Verteilerkastens einstückig ausgebildet ist und ein Paar von Steckerkopplungsaussparungen (31) und eine Sicherungsverbindungsaussparung (32) hat, die in der Oberfläche des Verteilerkastens gelegen sind, wobei freiliegende Anschlüsse im Inneren der Sicherungsverbindungsaussparung (32) angeordnet sind; und
einen Stecker (40), der mit der Fassung (30) verschiebbar beweglich gekoppelt ist, um elektrische Verbindung oder Trennung zwischen der Flachsicherung (20) und den Anschlüssen im Inneren der Sicherungsverbindungsaussparung (32) zu ermöglichen,
**dadurch gekennzeichnet, dass** der Stecker (40) mit der Flachsicherung (20) seitlich koppelbar ist und die Vorrichtung ferner mindestens eine Sicherungseinsetzhalterung (43) umfasst, die an einer Seite des Steckerkörpers (41) ausgebildet ist, um zu ermöglichen, dass die Flachsicherung (20) seitlich darin eingesetzt wird, und einen Sicherungshaltevorsprung (431) hat.

2. Befestigungsvorrichtung nach Anspruch 1, ferner umfassend:
eine Stützwand (33), die außerhalb der Sicherungsverbindungsaussparung (32) aus der Oberfläche des Verteilerkastens hervorsteht und dazu dienen kann, eine Seitenwand (23) der Flachsicherung (20) zu halten.

3. Befestigungsvorrichtung nach Anspruch 1 oder 2, worin der Stecker (40) aufweist:
einen Steckerkörper (41), der dafür konfiguriert ist, einem Benutzer zu ermöglichen, den Stecker einfach mit der Hand zu ergreifen, und dazu dient, die Flachsicherung (20) zu halten; und
ein Paar von vertikal beweglichen Führungen (42), die von gegenüberliegenden Seiten des Steckerkörpers (41) nach unten hervorstehen, um dadurch vertikal beweglich in die jeweiligen Steckerkopplungsaussparungen (31) eingesetzt zu werden, und jeweils einen Vorsprung (421, 422) haben, um an einer nach oben oder unten bewegten Position des Steckers (40) fest eingerastet zu werden.

4. Befestigungsvorrichtung nach einem der vorhergehenden Ansprüche, worin die Sicherungseinsetzhalterung (43) ferner einen Sicherungshaltevorsprung (432) hat, der an einem oberen Ende derselben ausgebildet ist, um ein oberes Ende der Flachsicherung (20) zu halten.

5. Befestigungsvorrichtung nach Anspruch 3, worin jede der Steckerkopplungsaussparungen (31) an einer Innenfläche derselben ausgebildet ist, und zwar mit einer Einkerbung, die dem Vorsprung (421, 422) entspricht.

6. Befestigungsvorrichtung nach Anspruch 1 oder 4, worin die mindestens eine Sicherungseinsetzhalterung ein Paar von Sicherungseinsetzhalterungen (43a, 43b) aufweist, die an beiden Seiten des Steckerkörpers (41) symmetrisch ausgebildet sind.

## Revendications

1. Dispositif de fixation pour fusibles surbaissés (20) d'un véhicule, le dispositif de fixation servant à connecter électriquement un fusible surbaissé (20) à une boîte de jonction du véhicule ou à le déconnecter de celle-ci par l'intermédiaire d'un mouvement de translation, tout en maintenant l'accouplement entre le fusible surbaissé (20) et la boîte de jonction, et comprenant :
une douille (30), formée d'une seule pièce au niveau de la surface de la boîte de jonction et comportant une paire d'évidements d'accouplement de fiches (31) et un évidement de connexion du fusible (32), situés dans la surface de la boîte de jonction, des bornes exposées étant agencées à l'intérieur de l'évidement de connexion du fusible (32) ; et
une fiche (40) accouplée à la douille (30) de manière à pouvoir se déplacer par translation, pour permettre la connexion ou la déconnexion électrique entre le fusible surbaissé (20) et les bornes à l'intérieur de l'évidement de connexion du fusible (32) ;
**caractérisé en ce que** la fiche (40) peut être accouplée latéralement au fusible surbaissé (20), le dispositif comprenant en outre au moins une console d'insertion du fusible (43), agencée au niveau d'un côté du corps de la fiche (41), pour permettre l'insertion latérale du fusible surbaissé (20) dans celui-ci, et comportant une saillie de fixation du fusible (431).

2. Dispositif de fixation selon la revendication 1, comprenant en outre :
une paroi de support (33), débordant de la surface de la boîte de jonction, au niveau de l'extérieur de l'évidement de connexion du fusible (32), et servant à supporter une paroi latérale (23) du fusible surbaissé (20).

3. Dispositif de fixation selon les revendications 1 ou 2, dans lequel la fiche (40) englobe :
un corps de fiche (41), configuré de sorte à permettre à un utilisateur de simplement saisir le fusible par la main, et servant à supporter le fusible surbaissé (20) ;
une paire de guides à déplacement latéral (42), débordant vers le bas à partir des côtés opposés du corps de la fiche (41), de sorte à être insérés par déplacement vertical dans les évidements d'accouplement respectifs de la fiche (31), et comportant chacun une saillie (421, 422), destinée à être piégée fermement au niveau d'une position déplacée vers le haut ou vers le bas de la fiche (40).

4. Dispositif de fixation selon l'une quelconque des revendications précédentes, dans lequel la console d'insertion du fusible (43) comporte en outre une saillie de support du fusible (432) formée au niveau de son extrémité supérieure, en vue de supporter une extrémité supérieure du fusible surbaissé (20).

5. Dispositif de fixation selon la revendication 3, dans lequel chacun des évidements d'accouplement du fusible (31) est formé au niveau de sa surface interne d'un renfoncement correspondant à la saillie (421, 422).

6. Dispositif de fixation selon les revendications 1 ou 4, dans lequel la au moins une console d'insertion du fusible englobe une paire de consoles d'insertion du fusible (43a, 43b), agencées de manière symétrique a niveau des deux côtés du corps de la fiche (41).
